# EUROPEAN PATENT SPECIFICATION

(11) **EP 2 038 144 B1**
(45) Date of publication and mention of the grant of the patent: **12.01.2011**
(21) Application number: 06747979.0
(22) Date of filing: 29.06.2006
(51) Int. Cl.: B60R 19/56

(54) **UNDERRUN PROTECTION FOR VEHICLE**
UNTERFAHRSCHUTZ FÜR FAHRZEUG
PROTECTION ANTI-ENCASTREMENT DESTINEE A UN VEHICULE

(43) Date of publication of application: 25.03.2009
(73) Proprietor: Volvo Lastvagnar AB, 405 08 Göteborg (SE)
(72) Inventor: ALVARSSON, Billy, S-517 71 Olsfors (SE)
(74) Representative: Fröhling, Werner Otto
(86) International application number: PCT/SE2006/000806
(87) International publication number: WO 2008/002212

(56) References cited:
- EP-A1- 0 894 678
- WO-A1-2006/018721
- DE-A1- 10 130 637
- DE-U1- 9 419 691
- US-A- 6 068 329

## Description

### TECHNICAL FIELD

The present invention relates to a crash protection device and in particular to an underrun protection system.

### BACKGROUND OF THE INVENTION

Safety standardizations and demands from the public drive development of different safety solutions in vehicles and in particular for commercial vehicles such as heavy goods vehicles. These are equipped with underrun protection solutions for reducing the risk of injuries to people traveling a smaller vehicle crashing into the heavy goods vehicle. The underrun protection is arranged to absorb energy in the collision and prevent or at least reduce the risk for the smaller vehicle to come in under to the heavy vehicle. With an underrun protection solution the energy is primarily focused in the small vehicles front and/or the underrun protection solution itself while reducing the risk of the smaller vehicle coming in under the larger vehicle. Large heavy goods vehicles, such as trucks, often have a large ground clearance between the ground and the vehicle under side.

Conventionally, underrun protection solutions are designed with a stiff structure arranged to absorb energy by inelastic deformation of parts of the underrun protection solution, often together with deformation of parts of the crashing vehicle. These types of solutions can considerable reduce collision forces exerted on people traveling in respective vehicle and thus reduce risk of injuries.

An example of previously known underrun protection arrangements can be found in WO0012357 wherein an underrun protection is described where the underrun protection element is mounted with a pivotable fastening element. In WO0012357 the underrun protection arrangement is made to be pivotable in order to allow for changing the ground clearance but it also illustrates how many underrun protection arrangements during a crash will have a pivotable movement.

A problem with known protection solutions is that the deformation zones are in many realistic cases too short to allow efficient deformation zones above certain vehicle speeds.

Another problem with existing solutions is that the underrun protection may move slightly upwards due to the pivot like mounting design and thus a crashing small vehicle is under risk of getting in under the heavy vehicle in some crash scenarios.

DE 9419691 U1 discloses an underrun protection system for a vehicle in which two frame connectors are arranged to be independently displaced parallel to a horizontal plane upon application of a force.

WO 2006/018721 A1 discloses an impact dissipation device comprising a track assembly with a plurality of resistive pins and a shearing member slidingly attached to the track assembly for shearing the resistive pins individually in sequence for dissipating impact energy in case of a collision.

It is therefore an object to provide an underrun protection solution which remedies or at least partly reduces some of the problems described above.

### SUMMARY OF THE INVENTION

The objects of the present invention are provided in a number of aspects, wherein a first aspect, an underrun protection system for a vehicle, comprising a beam attached to a frame connector for mechanical attachment to a longitudinally extending frame portion of the vehicle, wherein said frame connector is arranged to move in a displacement substantially parallel to a horizontal plane upon application of a force. A linear rail or a curved rail is located between each frame connector and a frame mounted console. The system comprises a deformable washer provided as locking means for fasteners attaching the rail to the console, said washer being arranged to break at a pre-defined force so as to allow for a movement of the frame connector in said horizontal plane holding the frame connector in a vertical direction upon application of said force.

The system may comprise at least two frame connectors arranged to move independently of each other. The system may further comprise a deformable element located in displacement direction of the beam.

Another aspect of the present invention, a vehicle comprising an underrun protection according to the above is provided.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically a heavy vehicle with underrun protection according to the present invention;
Fig. 2 illustrates schematically a close up of the underrun protection from Fig. 1;
Fig. 3a illustrates a close up of a mounting arrangement for the underrun protection from Fig. 1;
Fig. 3b illustrates schematically in a close up of a T-plug used in mounting of the underrun protection from Fig. 1;
Fig. 3c illustrates schematically a cross section of the T-plug and surrounding components of the underrun protection from Fig. 1; and
Fig. 4 is a schematically top view of another embodiment of the present invention.

### DETAILED DESCRIPTION OF PREFERRED EMBODIMENTS

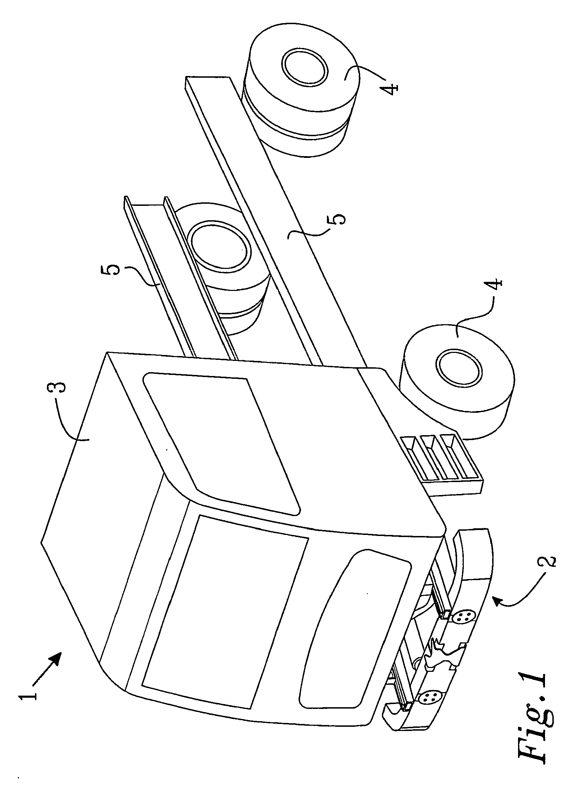

In Fig. 1 reference numeral 1 generally denotes a heavy commercial vehicle (e.g. a truck, gas truck, refuse collection vehicle), and 2 a front underrun protection system (FUPS), according to the present invention, attached to the vehicle 1. The vehicle 1 comprises a frame 5, wheels 4, and a cabin 3 for the driver. The vehicle further comprises engine, gear box, power distribution components, and other components normally part of the vehicle; however, these are easily appreciated by the person skilled in the art and may vary depending on vehicle function and type and are therefore not illustrated in the figures.

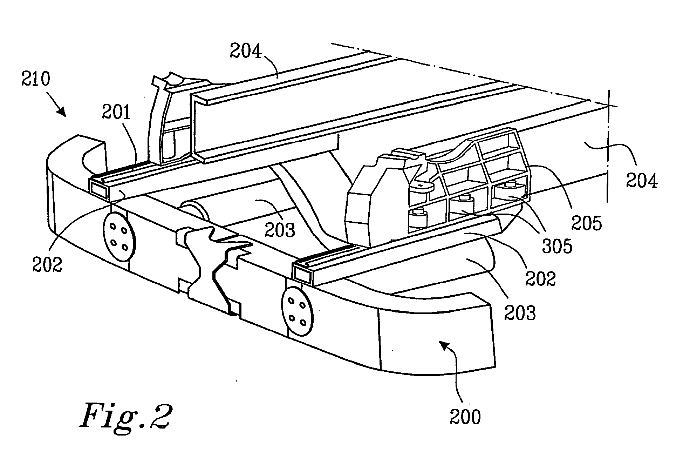

In Fig. 2, the front underrun protection according to the present invention is shown in more detail. A front underrun protection (FUP) beam 200 is shown together with parts of the frame of the vehicle for understandings of the respective parts' interrelated functionality. The underrun protection beam 200 is attached to a frame connector 202 in turn attached directly or indirectly to a frame 204 of the vehicle 1. In an embodiment of the present invention, a console 205 is mounted on the frame 204 and the frame connector 202 of the FUP beam 200 is in turn attached to the console 205. A rail 201 may be mounted in between the frame connector 202 and the console 205 in order to provide a movement capability of the FUP beam 200, frame connector 202 and rail 201 in relation to the console 205. In the embodiment shown in Fig. 2, the movement is translational. The FUP beam 200 may be made of a stiff material, for instance any suitable metal (e.g. aluminum or steel) or enforced ceramics.

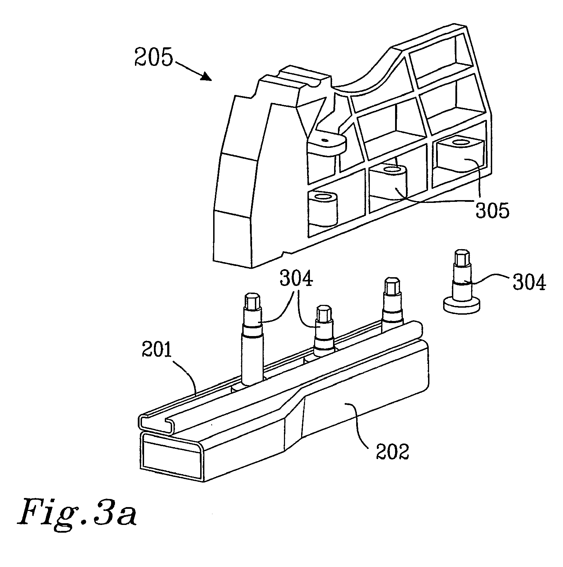

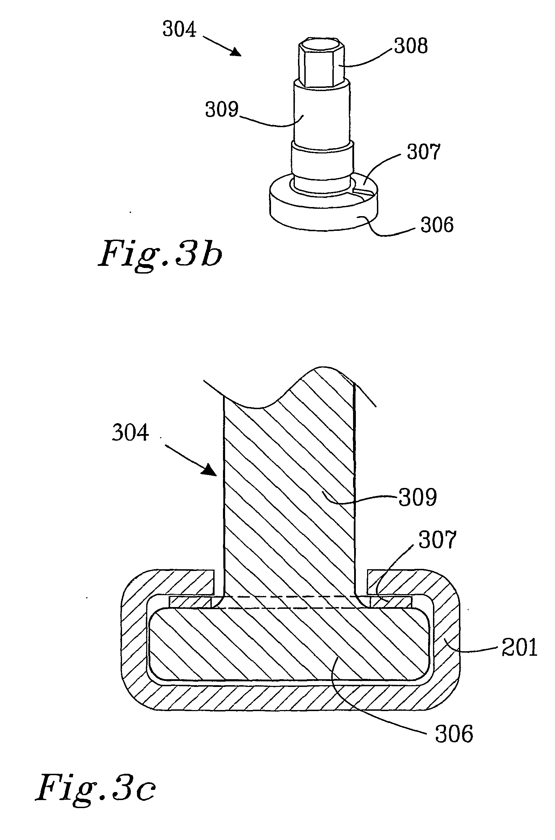

Fig. 3a shows in detail an example of mounting of the rail 201 to the console 205. One or several T-plugs 304 provide a connection between the rail 201 and the console 205. The console 205 may have one or several T-plug mating structures 305 arranged with a respective flange (not shown) against which a threaded nut 308 will rest on when a FUP system 210 comprising FUP beam 200, frame connector 202, and rail 201 is mounted. The T-plug 304 as seen in Fig. 3b comprises a T-section 306, a shaft section 309 and a threaded bolt section (the thread not shown) on the opposite end part of the T-plug as seen from the T-section 306 for receiving a threaded nut when securing the T-plug to the console 205. In order to provide a secure fit a washer 307 may be provided. This washer 307 may be for instance a fiber washer 307 which provides friction against translational movement in relation to the console 205 up to a certain force. This ensures that if a car or some other vehicle crash into the FUP system 210, at some force the washer will break and no or small friction forces will remain between the T-plug T-section 306 and the rail 201, and the FUP system 210 may move in relation to the console 205. The force at when the washer 307 will break can be pre defined so as to conform to legislative demands when a deformation zone should come into effect. Fig. 3c illustrates with a cross section of the T-plug 304 and the rail 201 how the T-plug 304 secures to the rail 201 when the nut urges the T-plug upward and the washer 307 presses against the underside of the top part of the rail 201.

When the FUP system 210 can move in relation to the frame 204 as described above, some other energy absorbing element may be active, for instance a crash tube 203 as shown in the embodiment of Fig. 2. The crash tube 203 is arranged to deform when subjected to forces and in that way absorb energy from the crash, this may be done for instance by arranging the crash tube such as to be deformed in a similar way as a accordion/concertina folds during play, i.e. with a crinkled structure. Alternatively, the crash tube may be arranged with a dampening element such as a pneumatic or hydraulic dampening element (e.g. similar to a suspension system of a vehicle). The FUP system can be used without the crash tube 203 using some other deformation zone solution. For instance the T-plugs may be arranged to, when the washers 307 brake, have a certain friction against the rail 201 and thus being able to absorb a certain amount of energy in the crash. In a similar manner some other fastening element(s) used for holding the underrun protection system 210 in relation to the frame 5, 204, may be arranged to have some friction during the crash in order to absorb energy.

The underrun protection beam 200 can be arranged in several different suitable shapes but should be resilient enough to withstand the forces applied to it in order to transfer the forces to a deformation zone element 203 and not fail. The beam 200 may be in some suitable way connected to a bumper structure (not shown) located externally hiding the underrun protection system 210 or the bumper structure may be firmly connected to some other part of the vehicle, for instance directly on the frame 5, 204. The bumper structure is manufactured to handle small forces, for instance such present when bumping into goods in a loading area or another vehicle during slow relative movement of the vehicles. The underrun protection system 210 comes into action when forces are larger than a certain pre defined force limit which can be set by regulatory standards or other aspects of importance.

An example of the function is given in the following. For instance, a car crashing into the heavy vehicle will first hit the bumper structure and if the forces involved are large enough the bumper will break and the car will hit the underrun protection system 210 behind the bumper structure. If the forces are larger than a pre defined limit, the washers 307 providing friction between the T-plug 304 and the rail 201 will break and the underrun protection system 210 will start to move in a translational manner in relation to the frame 5, 204. Again, if the forces involved in the crash are large enough, the underrun protection system 210 will start to affect the deformation element, for instance the crash tube as illustrated in Fig. 2, which will absorb energy from the crash. The pre defined force limit may for example be of the order 200 kN; however, other force limits may be applied depending on type of vehicle 1.

The solution where the underrun protection system 210 may move in a translation manner substantially parallel to the frame 204 provides the possibility for longer movement than for solutions where the movement is for instance in a pendulum or pivoting manner which is common for the conventional techniques; a pendulum has a pre defined length and will be limited by some factor to the distance between the ground and the pendulum rotational point. In the above described embodiments, the translational movement may be up to for example in total 600 mm.

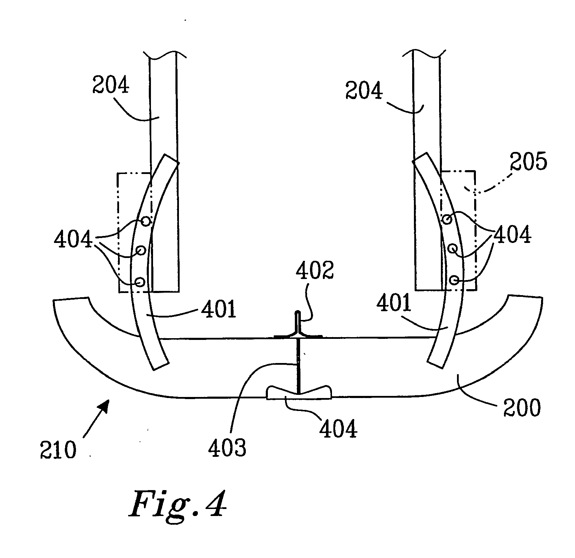

An advantage of the solution according to the present invention is that it will be less depending on where a crashing object hits on the FUP beam 200 while still maintaining efficient underrun protection and distribution of crash forces. For instance, for the rail 201 solution described above, any possible momentum forces may be taken up by the T-plugs. Independent of the crash scenario (at least for most scenarios) the operation of the FUP system 210 according to the present invention will be controlled to a translational movement of the FUP system 210. However, in some cases the forces applied to the beam 210 will be such as the translational movement in a linear direction in the longitudinal direction of the vehicle will be compromised, meaning that forces will act to move the FUP system 2 in a direction inwards towards the center of the vehicle. For instance the frame sides may even be pressed towards each other. For this purpose a split underrun beam (front or rear) can be provided. Such a split beam 200 can be seen in Fig. 4 showing a top view of the underrun system 210 according to the present invention. The split is indicated by the line 403 and the two parts of the beam 200 is kept together by a hinge element 404 on the surface facing a crashing vehicle and a lock element 402 on a back side of the beam 200. The lock element may be for instance formed by a continuous sheet of mechanically stiff material that is fastened at each end side to the beam 200 and bent to form a V-shape as seen from a top view. Along the V-shape in a vertical direction the sides of the V are held together by some suitable fasteners (not shown), for instance welds, screws, rivets, or bolt and nuts. During a crash where the split comes into operation, the fasteners holding the V sides together will break and thus absorb energy from the impact forces. An alternative embodiment of the present invention for handling large side forces may be to have a curved rail 201 arching slightly inwards towards the center of the vehicle in a direction backwards of the vehicle. This is also illustrated schematically in Fig. 4. The FUP beam 200 is mounted to a curved rail 401 directly or indirectly just as in the embodiment illustrated in Fig. 2. The curved rail is in turn mounted to the console 205 which in turn is mounted to the frame 204 of the vehicle. The console may be redesigned in order to receive the curved rail depending on the curvature of the rail 401. Crashed involving large forces in the inward direction will be steered through the curvature of the rail 401 inwardly and the FUP beam 200 will move more towards the center as more force is applied. This will reduce the risk of the frame sides moving inwardly. The movement is also in this curved rail solution restricted to a plane substantially parallel to the ground.

The split beam 200 may be used in combination with all embodiments of the present invention, including the linear backward rail based solution (Fig. 2) and the curved rail solution (Fig. 4).

Another advantage is that it is possible to allow possibility for adjusting the position of the underrun protection system 210 easily: for instance, it can be adjusted if the vehicle 1 is located in an environment with restricted space (e.g. on a ferry or in a parking lot). This can be done for instance by loosening the nuts 308 holding the T-plugs 304 and thereafter moving the underrun protection system 210 in desired direction. Another solution may involve an automatic adjustment, which may be controlled with an electrical control device located for instance in the cabin 3 or at some other suitable place on the vehicle 1. The automatic solution may involve e.g. electromechanical, pneumatic or hydraulic actuators for operating any locking mechanism holding the FUP system 210 in place and thereafter moving the underrun protection system 210 in desired direction using similar remotely controlled actuators.

The FUP system 210 can be pre assembled as a module that may easily be attached to the frame 5, thus potentially reducing assembly cost and/or assembly time for the vehicle. The pre-assembled module may comprise other elements for instance headlights, direction flasher, or other vehicle elements that can be found in the bumper or its vicinity.

The FUP system 210 may be designed with different geometrical sizes and shapes and with different fastening means in order to fit different vehicles types and versions.

Even though the above embodiments have been exemplified using a front underrun protection system (FUPS) it will operate for a rear underrun protection system (RUPS).

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, and that several "means", "devices", and "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. An underrun protection system (210) for a vehicle (1), comprising a beam (200) attached to a frame connector (202) for mechanical attachment to a longitudinally extending frame portion (5, 204) of the vehicle (1), wherein said frame connector is arranged to be displaced substantially parallel to a horizontal plane upon application of a force, and further comprising a linear rail (201) or a curved rail (401) located between said frame connector (202) and a frame mounted console (205), **characterized in that** the system comprises a deformable washer (307) provided as locking means for fasteners (304) attaching the rail (201, 401) to the console (205), said washer being arranged to break at a pre-defined force so as to allow for a movement of the frame connector (202) in said horizontal plane holding the frame connector (202) in a vertical direction upon application of said force.

2. The system according to claim 1, comprising at least two frame connectors (202) arranged to move independently of each other.

3. The system according to claim 1 or 2, further comprising a deformable element (203) located in displacement direction of the beam (200).

4. A vehicle comprising an underrun protection according to any of claims 1 to 3.

## Patentansprüche

1. Unterlaufschutzsystem (210) für ein Fahrzeug (1), das einen Träger (200) umfasst, der an einem Rahmenverbinder (202) für eine mechanische Anbringung an einem sich in Längsrichtung erstreckenden Rahmenabschnitt (5, 204) des Fahrzeugs (1) angebracht ist, wobei der Rahmenverbinder so ausgebildet ist, dass er im Wesentlichen parallel zu einer horizontalen Ebene bei Aufbringung einer Kraft verschiebbar ist, und außerdem eine lineare Schiene (201) oder eine gekrümmte Schiene (401) umfasst, die zwischen dem Rahmenverbinder (202) und einer am Rahmen angebrachten Konsole (205) angeordnet ist, **dadurch gekennzeichnet, dass** das System eine verformbare Scheibe (307) umfasst, die als Verriegelungseinrichtung für Befestigungselemente (304) vorgesehen ist, die die Schiene (201, 401) an der Konsole (205) anbringen, wobei die Scheibe so ausgebildet ist, dass sie bei einer vorherbestimmten Kraft bricht, damit bei Aufbringung der Kraft eine Bewegung des Rahmenverbinders in horizontaler Ebene möglich ist, wobei der Rahmenverbinder (202) in einer vertikalen Richtung gehalten wird.

2. System nach Anspruch 1 mit wenigstens zwei Rahmenverbindern (202), die so ausgebildet sind, dass sie sich unabhängig voneinander bewegen.

3. System nach Anspruch 1 oder 2, das außerdem ein verformbares Element (203) umfasst, das in Verschiebungsrichtung des Trägers (200) angeordnet ist.

4. Fahrzeug mit einem Unterlaufschutz nach einem der Ansprüche 1 bis 3.

## Revendications

1. Système de protection anti-encastrement (210) pour un véhicule (1), comprenant un longeron (200) fixé à un raccord de châssis (202) pour assurer une fixation mécanique à une partie de châssis (5, 204), s'étendant longitudinalement, du véhicule (1), ledit raccord de châssis étant agencé de manière à être déplacé de manière essentiellement parallèle à un plan horizontal lors de l'application d'une force, et comprenant en outre une traverse linéaire (201) ou une traverse courbe (401) située entre ledit raccord de châssis (202) et une console (205) montée sur le châssis, **caractérisé en ce que** le système comprend une rondelle déformable (307) fournie en tant que moyen de verrouillage pour des attaches (304) fixant la traverse (201, 401) à la console (205), ladite rondelle étant agencée de manière à se briser lors de l'application d'une force prédéfinie, de manière à permettre un mouvement du raccord de châssis (202) dans ledit plan horizontal tout en maintenant le raccord de châssis (202) dans une direction verticale lors de l'application de ladite force.

2. Système selon la revendication 1, comprenant au moins deux raccords de châssis (202) agencés de manière à se déplacer indépendamment les uns des autres.

3. Système selon la revendication 1 ou 2, comprenant en outre un élément déformable (203) situé dans une direction de déplacement du longeron (200).

4. Véhicule comprenant une protection anti-encastrement selon l'une quelconque des revendications 1 à 3.
